# EUROPÄISCHE PATENTSCHRIFT

(11) **EP 1 996 500 B1**
(45) Veröffentlichungstag und Bekanntmachung des Hinweises auf die Patenterteilung: **11.05.2016**
(21) Anmeldenummer: 07723256.9
(22) Anmeldetag: 14.03.2007
(51) Int. Cl.: H02P 25/00, H02P 27/06, H02K 3/28, H02K 11/00, B66B 5/16, B66B 11/04, H02P 25/22, H02K 16/04, H02K 5/22

(54) **AUFZUGANTRIEB**
ELEVATOR DRIVE
COMMANDE D'ASCENSEUR

(30) Priorität: 16.03.2006 EP 06005374
(43) Veröffentlichungstag der Anmeldung: 03.12.2008
(60) Teilanmeldung: 08021315.0
(73) Patentinhaber: ThyssenKrupp Elevator AG, 45143 Essen (DE)
(72) Erfinder: BREIDENSTEIN, Olaf, 90449 Nürnberg (DE); HERMANN, Günther, 73669 Lichtenwald (DE); JETTER, Markus, 70794 Filderstadt (DE); MÖLLGAARD, Nis-Anton, 73614 Schorndorf (DE); RESAG, Uwe, 72631 Aichtal (DE); SCHULZE, Jochen, 72770 Reutlingen (DE); VOGLER, Eberhard, 73765 Neuhausen a.d.F. (DE); WILHELM, Andreas, 73116 Wäschenbeuren (DE); GESSNER, Torsten, 40885 Ratingen (DE)
(74) Vertreter: m patent group
(86) Internationale Anmeldenummer: PCT/EP2007/002251
(87) Internationale Veröffentlichungsnummer: WO 2007/104550

(56) Entgegenhaltungen:
- EP-A- 0 678 968
- EP-A1- 0 535 344
- EP-A1- 0 603 644
- EP-A1- 0 671 356
- DE-A1-102004 002 570
- JP-A- 4 304 142
- JP-A- 4 342 893
- JP-A- 11 187 613
- JP-A- 62 296 752
- JP-A- 2004 072 845
- JP-A- 2005 039 932
- JP-A- 2005 304 119

## Beschreibung

Die Erfindung betrifft einen Aufzugantrieb gemäß dem Oberbegriff des Anspruchs 1 sowie einen mit einem derartigen Antrieb ausgebildeten Elektromotor.

Bei bekannten Aufzugantrieben werden diese mit einem ihrer Leistung entsprechenden Umrichter betrieben. Dies bedeutet, dass jeweils für einen Aufzugantrieb ein Umrichter eingesetzt wird. Bei größeren Aufzugleistungen ist derzeit vorgesehen, dass mehrere Antriebe, die jeweils von einem oder mehreren Umrichtern betrieben werden, auf eine Motorwelle wirken oder dass mehrere Antriebe unabhängig voneinander gleichzeitig und nebeneinander den Aufzug bewegen.

Allerdings ist zu beachten, dass sowohl für kleine als auch für große Leistungen Umrichter mit entsprechender Leistung benötigt werden. Dabei steigt das Kostenverhältnis für Umrichterleistungen ab einer bestimmten Leistung (> 100 kVA Ausgangsspitzenleistung) überproportional an, wodurch die Kosten für Aufzüge ab einer bestimmten Aufzugleistung zusätzlich erhöht werden.

Die herkömmliche Vorgehensweise ist aber auch hinsichtlich der Verfügbarkeit des Aufzugs problematisch. Insbesondere im Hochleistungsbereich sollte die Verfügbarkeit des Aufzugs nämlich immer gewährleistet sein. Bei Störungen, die durch einen defekten Umrichter verursacht werden, kommt der Aufzug zum Stillstand. Dies ist bspw. auch der Fall, wenn die Motorwicklung ausfällt.

Wirken mehrere Antriebe auf eine Welle, führt dies dazu, dass die Baulänge der Antriebseinheit und damit der Platzbedarf für den Antrieb stark zunimmt. Es ist daher erforderlich, zusätzlichen Raum im Maschinenraum zur Verfügung zu stellen, um diesem erhöhten Platzbedarf zu entsprechen. Dazu müssen die Antriebe besonders synchronisiert werden und es besteht die Gefahr des ungleichmäßigen Antriebs der Welle entlang ihrer Länge.

Aus der DE 10 2004 002 570 A1 ist ein Reluktanzmotor mit segementiertem Stator bekannt. Der Stator weist hier sechs Phasen auf, von denen jeweils drei von einem eigenen Umrichter versorgt werden.

Es stellt sich die Aufgabe, einen Antrieb für einen Aufzug bzw. einen Elektromotor für einen solchen Antrieb bereitzustellen, der einen ausfallsicheren Betrieb gewährleistet. Weiterhin sollen die Herstellungskosten besonders bei Antrieben mit hoher Antriebsleistung, insbesondere bei einem getriebelosen Aufzugantrieb, gesenkt werden. Im Betrieb sollen Energieverluste gering sein, so dass ein hoher Wirkungsgrad erreicht wird.

Diese Aufgabe wird gelöst durch einen Aufzugantrieb mit den Merkmalen des Anspruchs 1.

Dieser Aufzugantrieb kommt bspw. bei Antrieben von mehr als 50 kW zum Einsatz.

Ein Segment besteht erfindungsgemäß aus einem unabhängigen m-Phasensystem, das von einem Umrichter betrieben wird. Dies bedeutet, dass die von dem Aufzug benötigte Gesamtleistung durch die Anzahl an Segmenten geteilt werden kann. Von jedem einzelnen Umrichter ist nur diese um das Verhältnis Gesamtleistung zu Anzahl der Segmente reduzierte Leistung aufzubringen. Somit ist eine kostengünstigere Herstellung des Antriebs sowie aller in Zusammenhang mit dem Stator und dem Rotor benötigten Bauteile möglich.

Der erfindungsgemäße Aufzugantrieb ist insbesondere als Direktantrieb und somit getriebelos ausgebildet. Dieser getriebelose Antrieb ist im Gegensatz zu Seilbahnantrieben, bei denen üblicherweise ein Planetengetriebe eingesetzt wird, möglich, da der Gewichtsunterschied zwischen vollem und leerem Aufzug niedriger als bei Seilbahnen ausfällt.

Der Stator ist typischerweise in Umfangsrichtung in Segmente bzw. Sektoren unterteilt.

Als Elektromotor für den Antrieb eignet sich ein permanenterregter, bspw. bürstenloser Synchronmotor. Der Rotor ist somit mit einer Anzahl an Permanentmagneten bestückt.

Vorzugsweise ist jede Spule der Statorwicklung in konzentrierter Form ausgebildet. Jede Wicklung im Stator kann als Einzahnwicklung ausgebildet sein. Die einzelnen Spulen der Statorwicklung können parallel oder in Reihe zu einem Wicklungsstrang verschaltbar sein.

In Ausgestaltung der Erfindung sind die einzelnen Segmente galvanisch voneinander getrennt. Der von den Permanentmagneten erzeugte Fluss ist typischerweise über Polschuhe geführt.

Die Anordnung der Magnete im Rotor bilden vorzugsweise zusammen mit zwischen ihnen angeordneten Polschuhen eine Flusskonzentration für den Magnetfluss aus.

Das Magnetfeld der einzelnen Segmente breitet sich vorzugsweise nur im Bereich des Segments aus und erzeugt in dem einzelnen Segment ein Drehmoment.

Die einzelnen Segmente können je nach Anforderung beliebig parallel oder in Reihe miteinander verschaltbar und dann mit einem Umrichter zu betreiben sein.

Die Anzahl der Segmente des Elektromotors, insbesondere eines permanenterregten Synchronmotors, läßt sich mit folgenden Größen berechnen:
- p =: Polpaarzahl
- u =: Spulenseiten je Nut und Schicht
- m =: Strangzahl (Phasen)
- Q =: Nutenzahl

Über eine geeignete Auswahl des Verhältnisses Magnetpole zu Statornuten in Zusammenhang mit einer vorzugsweise konzentrierten Wicklung, was auch als Einzahnwicklung bezeichnet wird, ist die Segmentierung möglich.

Außerdem können kleinere Umrichter einfacher mit höheren Schaltfrequenzen betrieben werden, bspw. möglichst oberhalb von 8 kHz, so dass der Antrieb leiser ist. Je größer die Umrichter werden, desto mehr Probleme verursachen höhere Schaltfrequenzen. Niedrigere Frequenzen führen zu lauteren Motoren. Ein weiterer Vorteil des segmentierten Aufbaus des Motors des Aufzugantriebs, der in Gebäuden am oder im Aufzugschacht und in der Nähe von bewohnten Räumen angeordnet ist, besteht somit in der verringerten Geräuschentwicklung.

Die Erfindung betrifft ebenfalls einen Elektromotor bzw. eine Antriebsmaschine für einen vorstehend beschriebenen Aufzugantrieb.

Es werden ferner eine Klemmenanordnung für einen Elektromotor eines Aufzugantriebs der vorstehend beschriebenen Art, und ein Elektromotor mit einer derartigen Klemmenanordnung beschrieben.

Nach heutigem Stand der Technik werden getriebelose Aufzugantriebe als permanenterregte Synchronmotoren ausgeführt. Dabei ist es erforderlich, dass jede einzelne Motorwicklung aus dem Stator ausgeführt und an Klemmen angeschlossen wird, um von dort dann als Motoranschlusskabel an einzelne Frequenzumrichter geführt zu werden. Es werden somit mehrere Klemmen und Klemmenkästen am Motor benötigt. Dies ist insbesondere bei großen Motoren problematisch, bei denen die zu verwendenden Kabel, Klemmen und Frequenzumrichter wegen der zunehmenden Größe schwer handhabbar sind.

Es ist darauf zu achten, dass jeder einzelne Klemmenkasten berührungssicher geschlossen werden kann, wobei die einzeln ausgeführten Motorwicklungen durch den Motor in die Klemmenkästen geführt werden müssen. Die Unübersichtlichkeit der Anschlüsse nimmt nach Anzahl der ausgeführten Wicklungen bzw. der Anzahl der Motoranschlusskabel zu. Außerdem ist die Zugänglichkeit zu den Klemmenkästen teilweise durch die Vielzahl der Klemmenkästen nur bedingt gegeben. Hinzu kommt, dass die Verlegung von Motoranschlusskabeln an den Motor aufwendig ist und der notwendige Bauraum für den Motor durch die Vielzahl der Klemmenkästen vergrößert wird.

Es ist somit wünschenswert, einen Elektromotor bzw. ein Motorgehäuse derart zu gestalten, dass mehrere Motorwicklungen in Klemmen ausgeführt werden können und dabei nur wenige Klemmenkästen benötigt werden, dass nur ein geringer zusätzlicher Bauraum durch die Vielzahl der Klemmen benötigt wird und die Übersichtlichkeit bei den Motoranschlusskabeln vorhanden ist. Des weiteren sollte der Zugang zu dem Motor nicht durch Motoranschlusskabel eingeschränkt sein.

Es soll folglich ein Elektromotor, insbesondere ein getriebeloser Motor, vorgestellt werden, der kostengünstig herstellbar und montierbar ist und bei dem die Verkabelung und Verdrahtung einfach durchzuführen ist.

Der vorgestellte Elektromotor ist für einen Aufzugantrieb der vorstehend beschriebenen Art vorgesehen. Dieser weist ein Motorgehäuse und eine Anzahl an Motorwicklungen auf, die an mindestens einer Klemme angeschlossen sind, wobei an dem Motorgehäuse Rippen oder Stege angeordnet sind, zwischen denen die mindestens eine Klemme, üblicherweise mehrere Klemmen, angeordnet ist.

Der beschriebene Elektromotor dient insbesondere zum Antreiben von Aufzügen, deren Fahrkorb über Tragemittel mit einem Gegengewicht verbunden ist, wie bspw. Seilaufzüge.

Das Motorgehäuse des Elektromotors, der insbesondere mit mehreren Motorwicklungen ausgeführt ist, ist so gestaltet, dass zwischen zwei Rippen des Motorgehäuses eine Art Kabelkanal gebildet wird. Dieser Bereich ist vorzugsweise auf beiden Seiten des Motors so ausgeführt, dass in diesem, also zwischen den beiden Rippen bzw. Stegen, die Klemmen sowie die ausgeführte Motorwicklungen verlegt bzw. befestigt werden können. So kann auch durch einfache und wenige Blechabdeckungen ein notwendiger Berührungsschutz der Anschlussklemmen erreicht werden. Das Motoranschlusskabel wird bspw. nach unten ausgeführt und kann von dort direkt in einen Kabelkanal geführt werden, ohne die Zugänglichkeit zu dem Motor einzuschränken. Lediglich durch Entfernen von wenigen Abdeckungen kann die Zugänglichkeit zu den ggf. vielen Klemmen erreicht werden.

Der vorgestellte Elektromotor ist vorzugsweise als Synchronmotor mit einem Rotor und einem Stator ausgebildet, wobei die Statorwicklungen an die mindestens eine Klemme angeschlossen sind.

Es bietet sich an, die Rippen in Umfangsrichtung anzuordnen. Außerdem sollten die Rippen in ihrem Verlauf eine vorbestimmte Höhe über der Gehäuseoberfläche nicht unterschreiten.

Es kann vorgesehen sein, dass mehrere Klemmen zwischen mindestens zwei Rippen angeordnet sind. Weiterhin können die Klemmen zwischen den Rippen nebeneinander und/oder in Umfangsrichtung hintereinander angeordnet sein.

In Ausgestaltung sind die Anschlüsse der Motorwicklungen ebenfalls zwischen den Rippen angeordnet.

Bei dem beschriebenen Elektromotor kann vorgesehen sein, dass Motoranschlusskabel von den Klemmen weg nach unten aus dem Motorbereich geführt sind. In diesem Fall sind die Motoranschlusskabel vorzugsweise nebeneinander aus dem Motorbereich geführt.

Weiterhin können von dem Motorgehäuse wegweisende Kanten von mindestens zwei nebeneinanderliegenden Rippen mit einer Abdeckung miteinander verbunden sein.

Es bietet sich an, dass die Rippen als Stützrippen zur Stabilisierung des Gehäuses dienen und dafür geeignet dimensioniert und angeordnet sind.

Das beschriebene Motorgehäuse weist Rippen auf, zwischen denen mindestens eine Klemme angeordnet ist. Dieses Motorgehäuse ist für Elektromotoren der vorstehend beschriebenen Art geeignet.

Es ist vorgesehen, dass ein Motor für einen Aufzugantrieb in mehrere Segmente unterteilt ist, wobei jeweils mindestens eine Motorwicklung für jede Phase ausgebildet ist. Die Segmente sind mit Kabeln an Klemmen angeschlossen und das Motorgehäuse weist typischerweise an seiner Außenseite in Umfangsrichtung Rippen auf, wobei mindestens zwei Rippen zwischen sich einen Raum bilden, in dem die Klemmen, die Kabel der Motorwicklungen und die Motoranschlusskabel aufgenommen werden können.

Die Rippen sollten derart ausgebildet sein, dass entlang einer vorbestimmten Rippenlänge eine festgelegte Rippenhöhe nicht unterschritten wird und im Zwischenraum zwischen zwei Rippen des Motorgehäuses eine Art Kabelkanal gebildet wird. Dieser Bereich ist insbesondere auf beiden Seiten der Maschine so optimiert, dass zwischen den Rippen die Klemmen sowie die herausgeführten Motorwicklungen bzw. deren Anschlüsse verlegt bzw. befestigt werden können.

Durch einfache und wenige Blechabdeckungen, die an den Rippen zu befestigen sind, kann ein geschlossener Einbauraum für die Kabel und Klemmen gebildet und ein erforderlicher Berührungsschutz der Anschlussklemmen erreicht werden.

Die zur Energieversorgung des Motors notwendigen Motoranschlusskabel werden bspw. im unteren Motorbereich herausgeführt und können von dort direkt in einen Kabelkanal geleitet werden, ohne durch ein Kabelwirrwarr die Zugänglichkeit zu der Maschine einzuschränken. Eine Zuführung von Kabeln kann zu einer Seite - eine Abführung zu der anderen Seite erfolgen.

Auf diese Weise ist es möglich, jeden einzelnen Klemmenkasten berührungssicher zu schließen. Es ist zu beachten, dass die einzelnen aus dem Motor bzw. dem Stator herausgeführten Motorwicklungen durch den Motor in die Klemmenkästen geführt werden müssen. Durch die vorgeschlagene Anordnung der Anschlüsse und der herausgeführten Wicklungen sowie die Anzahl der Motoranschlusskabel wird die Übersichtlichkeit nicht eingeschränkt. Die Zugänglichkeit zu den Klemmenkästen ist auch bei einer Vielzahl an Klemmenkästen ausgezeichnet.

Die Verlegung von Motoranschlusskabeln an den Motor erweist sich als einfache Tätigkeit. Weiterhin ist der für den Motor erforderliche Bauraum durch die Klemmenkästen nicht vergrößert.

Bei Aufzügen wird insbesondere auf eine Überwachung der Bremsen geachtet. Im Anschluss wird eine Federbruchüberwachung bei federkraftbetätigter Sicherheitsbremse beschrieben. Dieses Prinzip kann Anwendung bei einem Aufzugantrieb und einem Elektromotor für Aufzugantriebe der vorstehend beschriebenen Art finden.

Das Prinzip der federkraftbetätigten Bremse als Sicherheitsbauteil ist im Stand der Technik bekannt. Dabei wird eine elektromechanisch, hydraulisch oder auf ähnliche Weise vorgespannte Feder im Bremsfall genutzt, um die Federkraft als Bremskraft über Bremsbeläge oder andere Einrichtungen auf Bremsscheiben, Bremstrommeln oder ähnliche Einrichtungen wirken zu lassen. Da oftmals die Energie zum Vorspannen der Feder dauernd vorgehalten werden muss, führt dies bei Energieausfall unweigerlich zur Betätigung der Bremse, was unter dem Begriff "Fail Save" bekannt ist.

Das Einsatzgebiet dieser federkraftbetätigten Bremsen ist weit. Sie kommen dort zum Einsatz, wo Antriebe abgebremst oder gehalten werden müssen. So werden solche federkraftbetätigten Bremsen beispielsweise bei Aufzugsantrieben, Seilbahnantrieben, Jahrmarktfahrgeschäften, Windkraftanlagen usw. verwendet. In diesen Anwendungsgebieten erfüllen die federkraftbetätigten Bremsen sicherheitstechnische Aufgaben. So muss beispielsweise die Anlage kurzzeitig betriebsmäßig im Stillstand gehalten werden oder im Notfall die komplette Anlage abgebremst und zum Stillstand geführt werden, um Gefahren von Personen oder der Anlage abzuwenden.

Das beschriebene Prinzip der Bremse hat jedoch bei bestimmten Voraussetzungen Nachteile. Die als Spiral- oder Tellerfedern genutzten Federn, die einzeln oder im Paket verwendet werden, können brechen oder weich werden und somit kräftemäßig nachgeben. Daher muss der Zustand der Bremse und der Bremsfedern regelmäßig überprüft werden. Wenn die vorgespannt gehaltene Feder oder auch die Federpakete durch Gehäuse oder andere Maschinenteile abgedeckt oder von außen nicht sichtbar sind, kann der Zustand der Federn nicht visuell erkannt werden. Eine häufige Betätigung der Bremse, beispielsweise bei einer betriebsmäßigen Haltefunktion der Bremse, kommt vor, wenn die Anlage kurz in Betrieb ist und dann in einem geänderten Zustand wieder festgehalten werden muss.

Insbesondere im Aufzugbetrieb ist eine derartige Haltebremse bei jeder einzelnen Fahrt in Aktion. In jeder Haltestelle, bei der der Aufzug hält, wird der Aufzugfahrkorb über seinen Antrieb durch eine derartige Bremse gehalten. Dabei wird beim betriebsmäßigen Halt in den Haltestellen der Aufzugfahrkorb in vielen Aufzuganlagen nicht direkt durch die Bremse gehalten, sondern indirekt durch Angreifen der Bremsen an den Seilen, an der Treibscheibe oder am Antrieb. Beim Fahrbeginn wird die Bremse wieder gelöst, so kann über die Lebensdauer der Bremse eine sehr hohe Schaltanzahl an Bremsschließen und -öffnen erreicht werden, so dass im Laufe der Zeit die Federn oder die Federpakete durch Dauerbruch, Materialermüdung oder dergleichen versagen können. Wenn nun auch die Federn in einem Gehäuse oder ähnlichem eingebaut sind, ist es äußerst schwierig ein derartiges Versagen einer einzelnen Feder in diesem Federpaket zu erkennen. Dies ist jedoch unter dem Aspekt der Sicherheit nicht hinnehmbar, da ein Versagen einer Feder oder mehrerer Federn in einem Paket zu einem Bremskraftverlust oder sogar zum kompletten Ausfall der Bremskraft führt.

Bei federkraftbetätigten Bremsen, die hydraulisch gelüftet werden, ist der versteckte bzw. verdeckte Federeinbau sehr oft der Fall, da das Federpakt bestehend aus Tellerfedern in einer Bremszange oder einer entsprechenden Vorrichtung eingebaut ist und die hydraulischen Bereiche flüssigkeitsdicht ausgeführt sein müssen. Um das Versagen einer einzelnen Feder in einem Paket erkennen zu können, muss die komplette Bremszange zerlegt werden, was zu längeren Betriebsunterbrechungen führt.

Es ist somit wünschenswert, ein sicheres und schnelles Feststellen von Federbruch oder anderem Federversagen von Bremsfedern, insbesondere bei in Gehäusen oder versteckt eingebauten, also nicht visuell überwachbahren Federn von Sicherheitsbremsen, zu gewährleisten.

Das hier beschriebene Verfahren dient zum Überwachen einer federkraftbetätigten Bremse, wobei eine zum Spannen bzw. Vorspannen mindestens einer Feder benötigte Kraft bzw. ein dazu benötigter Kraftaufwand berücksichtigt wird.

Es kann vorgesehen sein, dass die Kraft, die zum Erreichen einer Endlage der mindestens einen Feder erforderlich ist, berücksichtigt wird. Diese Endlage kann über eine vorgesehene Einrichtung abgefragt werden.

Die mindestens eine Feder kann elektromechanisch, elektrisch, mechanisch, pneumatisch oder hydraulisch gespannt bzw. vorgespannt werden. Als Federn kommen bspw. Spiral- oder Tellerfedern in Betracht. Es können einzelne oder in Paketen zusammengefasste Federn sein.

Bei einer hydraulisch gelüfteten Bremse wird bspw. ein Öldruck-Zeit-Verlauf detektiert. Der hydraulische Druck wird dabei vorzugsweise mittelbar oder unmittelbar in dem hydraulischen Ölsystem über geeignete Einrichtungen abgefragt.

Das beschriebene Verfahren ist in einem erfindungsgemäßen Aufzugantrieb oder mit einem Elektromotor für einen derartigen Aufzugantrieb anwendbar.

Das beschriebene Verfahren beruht somit auf der Erkennung eines Versagens einer Feder oder mehrerer Federn ohne visuelle Kontrolle im laufenden Betrieb. Dazu wird die Bremse typischerweise über entsprechende Schalter und Sensoren überwacht und über eine Steuerung wird die Überwachung entsprechend ausgewertet. Ein auftretender Mangel kann so rechtzeitig erkannt werden und es kann eine Warnung oder Meldung erfolgen. Die Federn, die nicht mehr funktionstüchtig sind, können ersetzt werden, bevor eine Betriebsstörung auftritt.

Es wird davon ausgegangen, dass teilweise oder einzeln durch Versagen ausgefallenen Federn einen veränderten, üblicherweise verringerten Kraftaufwand zum Vorspannen benötigen. Bei einer hydraulisch gelüfteten Bremse kann diese geringe Öffnungskraft bspw. über den Öldruck-Zeit-Verlauf erfasst werden. Dabei wird mit einem Öldruckmesser der aktuelle Öldruck vorzugsweise in unmittelbarer Nähe in der Zuleitung zu der Bremszange gemessen. Zusätzlich wird in der Endlage der vorgespannten Feder diese Endlage über Kontakte oder geeignete Einrichtungen erkannt. Es ergibt sich dann eine logische Verknüpfung dieser beiden Ereignisse zur Erkennung eines Versagens oder teilweise Versagens einer Feder.

Wenn die Endlage der Feder im Normalfall detektiert wird, wird immer zuerst das Signal des erreichten maximalen hydraulischen Drucks angegeben und dann das Endlagensignal der Feder. Im Falle eines Federbruchs reicht jedoch bereits ein geringerer Öldruck aus, um die Feder in die Endlage zu bringen bzw. die Bremse zu öffnen, so dass das Endlagensignal zeitlich vor dem maximalen Öldrucksignal gegeben wird. Durch entsprechende Wahl des Einstellwerts eines Drucksensors lässt sich zum Beispiel diese Überwachung einstellen. Der eingestellte, zu überwachende Druckwert muss unter dem Öldruck liegen, der betriebsmäßig mindestens üblicherweise zur Öffnung der hydraulischen Bremse notwendig ist. Die Auswertung dieser Signale kann nun über eine analoge oder digitale Steuerung erfolgen, die dann das Ergebnis "OK" oder "Federbruch" liefert.

Durch regelmäßige Prüfungen in kurzen oder längeren Abständen kann die Bremse stetig überwacht werden. Alternativ kann die Auswertung bei jeder Betätigung der Bremse durchgeführt werden.

Neben dem hydraulischen Spannen der Feder und der Überwachung des Öldrucks und eventuell der zum Erreichen des Drucks erforderlichen Zeit kann auch eine andere Spannkraft verwendet und überwacht werden. So kann die Feder bspw. pneumatisch oder auch elektrisch mit Magnetspulen gespannt werden. Dabei werden die auftretenden elektrischen Werte mit entsprechenden vorgegebenen Werten verglichen. Bei weiterer Berechnung und Vergleich mit der Endlagenüberwachung kann dann "OK" oder "Alarm" angezeigt werden.

Die beschriebene Bremseinrichtung kommt in einer Aufzuganlage zum Einsatz und wird durch Federkraft betätigt. Die Bremseinrichtung dient insbesondere zur Durchführung eines oben beschriebenen Verfahrens. Bei dieser ist eine Einrichtung zur Überwachung einer Kraft, die zum Spannen mindestens einer Feder erforderlich ist, vorgesehen.

Die Bremseinrichtung wird durch Federkraft betätigt, wobei bspw. durch mindestens eine Feder ein Reibbelag gegen eine Bremsfläche gedrückt und dabei eine Bremskraft erzeugt wird. Diese Bremskraft verzögert die translatorisch oder rotatorisch gegenüber dem Bremsbelag bewegte Bremsfläche.

Wird die Endlage der Feder überwacht, bietet es sich an, die ermittelten Werte mit vorgegebenen Werten zu vergleichen. Bei Über- oder Unterschreiten vorgegebener Grenzwerte wird "Alarm" gegeben.

Typischerweise ergibt die Überwachung der Endlage der vorgespannten Feder und die Überwachung des Vorspannens der Feder Werte, die miteinander und mit einer zeitlichen Abfolge ihres Auftretens verarbeitbar bzw. vergleichbar sind.

In Ausgestaltung des Verfahrens bzw. der Bremseinrichtung werden die Abfragen der Endlage der vorgespannten Feder und des Vorspanndrucks, bspw. des hydraulischen Vorspanndrucks, mit einer Logik oder einer entsprechenden Einrichtung verknüpft und mit vorgegebenen Werten verglichen. Bei einer Abweichung von vorgegebenen Werten wird ein Federbruch erkannt.

Grundsätzlich kann für die Überwachung des Vorspannens der Feder eine aufzuwendende Kraft und/oder eine aufzuwendende Zeit herangezogen werden. Die Endlage der vorgespannten Feder kann entweder direkt an den Federelementen oder indirekt über mittelbar und unmittelbar damit verbundene Elemente abgefragt werden. Dabei kann die Endlage über irgendeine Einrichtung bzw. über irgendwelche Einrichtungen ermittelt werden. So kann in einem hydraulischen Ölsystem der hydraulische Druck mittelbar oder unmittelbar über irgendwelche geeigneten Einrichtungen abgefragt werden.

Kommt die beschriebene Bremseinrichtung, bspw. eine Trommelbremse, bei einem schwimmenden Gehäuse zum Einsatz, ist es erforderlich, dass beim Bremsen eine Gegenkraft erzeugt wird.

Es ist heutzutage üblich, Aufzugdirektantriebe (Gearlessantriebe) als permanenterregte Synchronmaschinen auszuführen. Bei diesen Maschinen ist der Rotor an seiner dem Stator zugewandten Oberfläche mit Permanentmagneten bestückt. Daraus ergibt sich, dass der Rotor an seiner Oberfläche permanent magnetisch ist.

Der Rotor wird üblicherweise auf die Motorwelle durch Pressverband aufgebracht, das bedeutet mit großem Kraftaufwand in Axialrichtung auf die Welle gepresst, wobei die Nabe aufgeweitet und auf diese Weise die notwendige Verbindungskraft erzeugt wird. Dann wird der Rotor zusammen mit der Motorwelle in das Motorgehäuse mit dem Stator eingelassen. Dies bedeutet bei der Montage, also beim Einschieben des Rotors in den Stator, einen erheblichen Aufwand für die Vorrichtung, da der Rotor den Stator nicht berühren darf und zwischen Rotor und Stator nur ein sehr geringer Luftspalt vorgesehen ist. Dies macht sich insbesondere dann bemerkbar, wenn der Motor große Ausmaße annimmt.

Bei großen Aufzugantrieben ist üblicherweise die Motorachse betriebsmäßig horizontal ausgerichtet, da dann die zusätzlich zum Rotor auf der Motorachse befestigte Treibscheibe so angeordnet ist, dass die Seile von unten kommend über die Treibscheibe laufen und wieder nach unten geführt werden. Somit können die durch die Seile auf die Treibscheibe übertragenen Belastungen im wesentlichen vertikal auf die Motorachse und dann weiter auf bspw. zwei Wellenlager übertragen werden.

Die herkömmliche Vorgehensweise bringt einige Nachteile mit sich. So muss zur Montage des Rotors das Motorgehäuse so gekippt werden, dass die Motorwelle senkrecht nach oben zeigt, damit das Eigengewicht des Rotors stabilisierend auf die Vorrichtung wirkt. Dabei muss an der Motorwelle als Teil der Vorrichtung ein Einfügedorn befestigt werden.

Weiterhin ist bei der exakten Positionierung des Rotors zum Statorpaket die Abhängigkeit zur Fertigungstoleranz der verwendeten Bauteile zu sehen. Die exakte Positionierung des Rotors zum Statorpaket ist für die elektrische Leistung des Antriebs wichtig. Hinzu kommt, dass durch den Pressverband ein Austauschen des Rotors nur mit Motorwelle möglich ist.

Gerade bei großen Rotoren ist durch die Magnetfläche eine große Magnetkraft, z.B. deutlich höher als 1000 kg, quer zu der Achse wirksam, die bei der Montage oder Demontage bei kleinen Abstandsunterschieden zu in der Nähe befindlichen Flächen, bspw. Statorflächen, versucht, die Magnetfläche an die näher gelegene Gegenfläche anzulegen, wobei die Magnete und das Blechpaket des Stators leicht beschädigt werden und die weitere Rotorpositionierung erschwert wird.

Es ist somit wünschenswert, einen Motor bereitzustellen, bei dem ein Rotor, insbesondere ein Rotor mit Permanentmagneten, leicht in ein Motorgehäuse mit Stator einzubauen ist. Dazu ist es hilfreich, wenn der Rotor in horizontaler Lage eingebaut werden kann. Während des Einbaus ist es zweckmäßig, wenn der Rotor verschiebbar auf der Welle ist und damit exakt auf der Welle zu positionieren ist. Weiterhin sollte der Rotor einfach zu demontieren sein und sowohl bei der Montage als auch bei der Demontage nicht mit dem Stator in Berührung kommen.

Der beschriebene Elektromotor dient für eine erfindungsgemäße Aufzuganlage und weist einen Stator und einen Rotor auf, der fliegend auf einer Motorwelle mit einer Rotornabe gelagert und mittels eines Spannelements befestigt ist.

Der Elektromotor bzw. der Aufzugantrieb ist folglich derart aufgebaut, dass der Rotor fliegend auf der Welle gelagert ist. Die Verbindung zwischen der Rotornabe und der Motorwelle erfolgt über das Spannelement, das vorzugseweise eine einteilige oder mehrteilige bzw. geteilte Schrumpfscheibe ist. Somit kann eine Verschiebbarkeit des Rotors auf der

Welle während der Montage erreicht werden, um eine exakte Positionierung zu ermöglichen. Nach Lösen des Spannelements kann der Rotor wieder demontiert werden. Das Spannelement kann bspw. von der der Motorlagerung abgewandten Seite des Rotors spannbar und lösbar sein. Es ist z.B. mit um die Welle verteilten Schrauben zu spannen und zu lösen.

Besteht das Spannelement aus einer zweiteiligen Schrumpfscheibe, können die beiden Teile gegeneinander weisende Kegelflächen aufweisen, wobei die innere, der Welle zugewandte Fläche zylinderförmig ausgebildet ist. Dabei ist der Rotor im Bereich der Welle mit einer Nabe versehen, die auf der von der Welle entfernten Seite einen zylinderförmigen Oberflächenbereich aufweist.

Das Eigengewicht des Rotors wird durch die Welle getragen. Somit kann durch eine einfache Vorrichtung, die über Gewindestangen und eine Druckplatte an der Motorwelle befestigt ist, der Rotor in den Motor eingeschoben werden. Eine Berührung des Rotors mit dem Stator wird durch die exakte Führung mittels der Welle vermieden.

Der beschriebene Elektromotor ist insbesondere für Aufzüge geeignet, deren Fahrkorb über Tragemittel mit einem Gegengewicht verbunden ist, wie bspw. Seilaufzüge.

Wie erläutert, ist das Spannelement vorzugsweise durch mindestens eine Schrumpfscheibe gebildet. Es kann vorgesehen sein, dass an beiden axialen Enden auf der Rotornabe je eine Schrumpfscheibe angeordnet ist.

Der Rotor ist auf der Welle typischerweise mit einer Rotornabe gelagert, wobei die Welle im Bereich der Rotornabe zylindrisch ausgebildet ist. Die Rotornabe kann einen Außenbereich aufweisen, der kegelförmig ausgebildet ist.

Der vorgestellte Elektromotor kann in Zusammenhang mit einem erfindungsgemäßen Aufzugantrieb verwendet werden.

Der beschriebene Aufzugantrieb ist so vorteilhafterweise aufgebaut, dass der Rotor fliegend auf der Welle gelagert ist. Diese ist im Bereich der Rotornabe zylindrisch ausgebildet. Bei der Montage des Rotors ist die Welle schon in ihren beiden Lagern endgültig angebracht und damit in radialer Richtung stabilisiert.

Der Rotor ist auf der Welle mit der Rotornabe gelagert, deren der Welle zugewandte Fläche ebenfalls zylindrisch ausgebildet ist. Dazu kann die Nabe einen Außenbereich aufweisen, der kegelförmig bzw. kegelig ausgebildet ist. Alternativ ist auf einer ebenfalls außen zylindrisch ausgebildeten Nabe ein Ring angeordnet, dessen Außenkontur kegelig ist. Die Verbindung zwischen Rotornabe und Motorwelle erfolgt über das Spannelement, das auf seiner der Welle zugewandten Seite ebenfalls kegelig ausgebildet ist und entweder direkt auf die Nabenoberfläche wirkt oder zusammen mit dem ersten Ring eine sogenannte Schrumpfscheibe bildet.

Die Schrumpfscheibe ist bspw. auf der von der Welle entfernten Oberfläche der Nabe angeordnet und beim Anspannen wird der an einem Spannelement ausgebildete äußere Kegel in Axialrichtung über den auf der Nabe angeordneten inneren Kegelring gezogen und damit die Nabe zusammengedrückt. Die Spannung ist dabei mit Hilfe von rund um die Welle angeordneten Schrauben aufzubringen.

Es kann an beiden axialen Enden auf der Nabe je eine Schrumpfscheibe angeordnet sein, die durch die Schrauben gegeneinander gezogen werden. Alternativ ist nur eine Schrumpfscheibe vorgesehen, die mit Hilfe der Schrauben gegen die Nabenscheibe gezogen wird.

Solange die Schrauben nicht ordnungsgemäß angezogen sind, ist der Rotor auf der Welle verschiebbar und kann so in die gewünschte exakte Position gebracht werden. Nach Lösen des Spannelements kann der Rotor wieder demontiert werden.

Es ist zu beachten, dass während des Einschiebens des Rotors in den Stator und der exakten axialen Positionierung gegenüber dem Stator das Eigengewicht des Rotors bereits durch die Welle getragen wird, die in ihren Lagern angeordnet ist. Durch die genaue Führung der Welle wird eine Berührung des Rotors mit dem Stator vermieden. Besonders bei großen Rotoren mit mehreren hundert Kilogramm Eigengewicht ist es vorteilhaft, mit Hilfe einer einfachen Vorrichtung mit Druckplatte, die über Gewindestangen an der Stirnseite der Motorwelle befestigt ist, den Rotor in den Motor einzuschieben oder bei der Demontage wieder sicher aus dem Motor herauszuziehen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.
- Figur 1: zeigt einen Ausschnitt aus einer Ausführungsform des erfindungsgemäßen Stators.
- Figur 2: zeigt schematisch die Unterteilung eines Stators in mehrere Segmente.
- Figur 3: zeigt eine Ausführungsform des erfindungsgemäßen Elektromotors vereinfacht dargestellt zur Verdeutlichung einer Klemmenanordnung.
- Figur 4: zeigt in vereinfachter Darstellung einen Elektromotor in einer Draufsicht.
- Figur 5: zeigt in schematischer Darstellung eine Bremse mit hydraulischer Bremslüftung.
- Figur 6: zeigt eine erfindungsgemäße Rotorbefestigung.

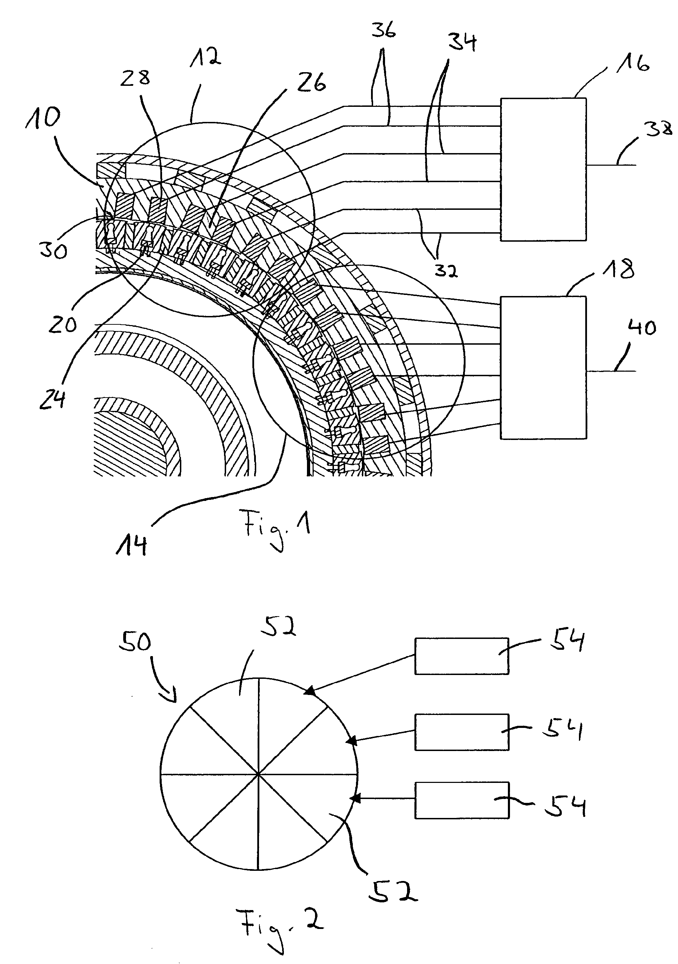

In Figur 1 ist ein Ausschnitt aus einem Stator dargestellt, der insgesamt mit der Bezugsziffer 10 bezeichnet ist. In dem dargestellten Ausschnitt sind umrahmt ein erstes Segment 12 und ein zweites Segment 14 verdeutlicht. Dabei ist dem ersten Segment 12 ein erster Umrichter 16 und dem zweiten Segment 14 ein zweiter Umrichter 18 zugeordnet.

In dem ersten Segment 12 sind Polschuhe 20, Magnete 24, Statorzähne 26 und Spulen 28 zu erkennen. Diese Spulen 28 sind bspw. mit konzentrierter Wicklung als sogenannte Einzahnwicklung ausgebildet. Weiterhin ist eine Statornut 30 dargestellt.

Das erste Segment 12 ist über sechs Kabel mit dem ersten Umrichter 16 verbunden, wobei Kabel 32 Phase 1, Kabel 34 Phase 2 und Kabel 36 Phase 3 führen. Der erste Umrichter 16 ist über einen ersten Anschluss 38 ebenso wie der zweite Umrichter 18 über einen zweiten Anschluss 40 mit der Aufzugsteuerung verbunden.

Das zweite Segment 14 ist ein kleinstes Motorsegment mit drei Phasen und je einer Spule für eine Phase. Es sind aber verschiedene Aufteilungen der Wicklungen in Segmente und unterschiedliche Verschaltungsmöglichkeiten der Segmente miteinander realisierbar. So können mehrer Statorzähne in einer Phase umfasst sein oder auch mehrere kleinste Segmente einem Umrichter zugeordnet sein.

In Figur 2 ist das Prinzip der erfindungsgemäßen Aufteilung einer Statorwicklung in Segmente und der Zuordnung von Segmenten zu Umrichtern verdeutlicht. Zu erkennen ist ein schematisch dargestellter Stator 50, der in acht Segmente 52 unterteilt ist. Jedes dieser Segmente 52 ist einem Umrichter 54 zugeordnet, wobei in der Darstellung aus Übersichtlichkeitsgründen lediglich drei Umrichter 54 dargestellt sind.

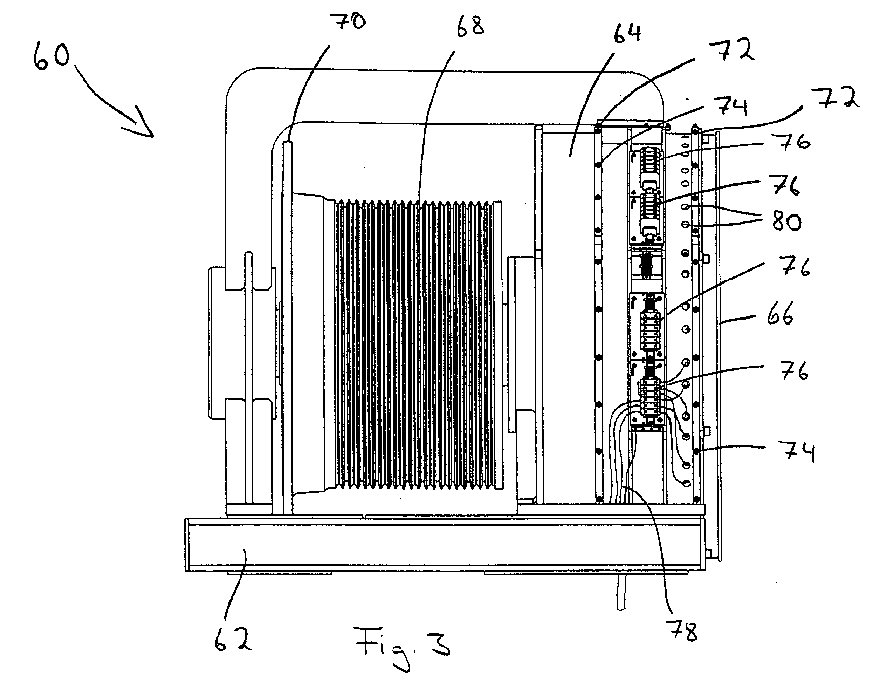

In Figur 3 ist in vereinfachter Darstellung ein Elektromotor 60 wiedergegeben. In der Darstellung sind ein Maschinenrahmen 62, ein Statorgehäuse 64, eine Rotorabdeckung 66 und eine Treibscheibe 68 mit einer Bremsscheibe 70 gezeigt.

Weiterhin sind zwei Rippen 72 dargestellt, in denen sich Befestigungspunkte 74 für eine Abdeckung befinden.

Weiterhin zeigt Figur 3 zwischen den beiden Rippen 72 angeordnet vier Klemmen 76, die vorzugsweise jeweils für ein Segment vorgesehen sind. Motoranschlusskabel 78 verbinden die Klemmen 76 mit den Umrichtern.

Für die Verkabelung der Spulen sind in dem Statorgehäuse 64 Durchgangslöcher 80 vorgesehen. Durch diese werden die Kabel der Spulen geführt.

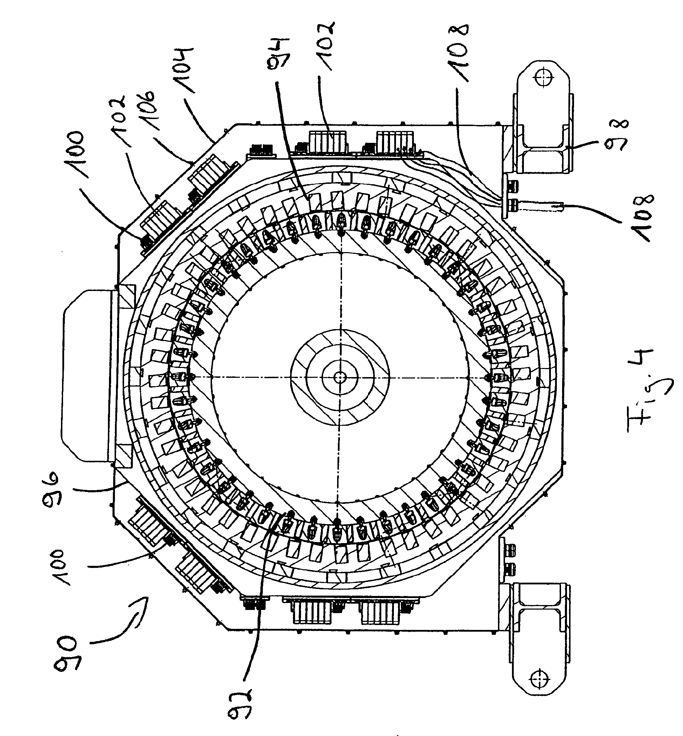

In Figur 4 ist in vereinfachter Darstellung ein Elektromotor für einen Aufzugantrieb dargestellt, der insgesamt mit der Bezugsziffer 90 bezeichnet ist. Der Elektromotor 90 umfasst einen Rotor 92 und einen Stator 94, ein Motorgehäuse 96 und einen Maschinenrahmen 98. Der Rotor 92 ist als Innenläufer in dem Stator 94 drehbar gelagert.

Auf dem Motorgehäuse 96 sind Rippen bzw. Stützrippen 100 angeordnet, wobei zwischen den Rippen 100 Klemmen 102 vorgesehen sind. Darüber befindet sich eine Klemmenraumabdekkung 104, die über Befestigungspunkte 106 verfügt. Motoranschlusskabel 108 sind die Kabel zum Verbinden der Klemmen 102 mit den Umrichtern.

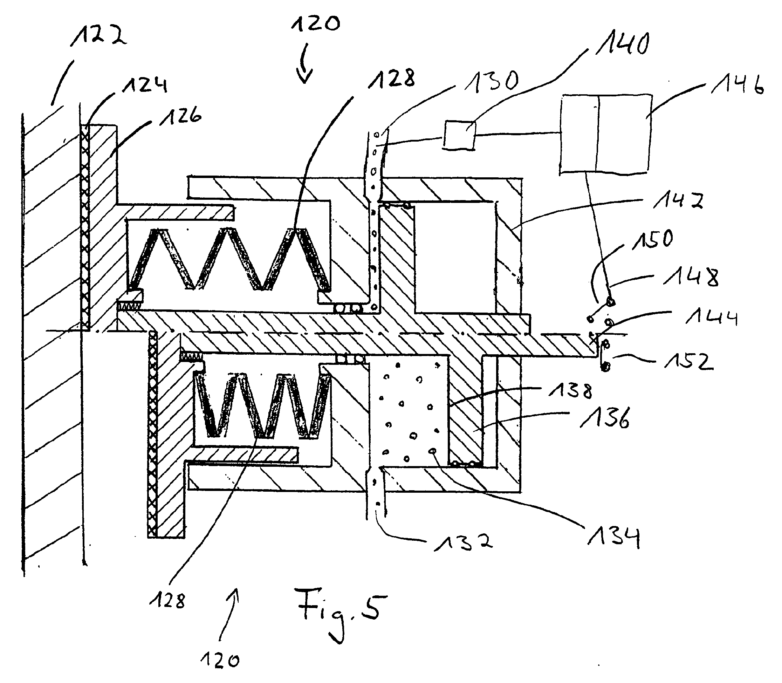

In Figur 5 ist schematisch eine Bremse 120 mit hydraulischer Bremslüftung gezeigt, wobei in der oberen Hälfte die Bremse 120 in betriebsmäßig bremsendem Zustand und in der unteren Hälfte in gelüftetem Zustand dargestellt ist.

Die Darstellung zeigt eine Bremsscheibe 122, einen Bremsbelag 124, eine Druckplatte 126, eine Feder 128, eine Ölleitung 130 für Zufuhr und Abfuhr, einen Zufluß 132 für ein Druckmedium 134, bspw. ein Drucköl, einen Kolben 136 mit Kolbenfläche 138, eine Öldrucküberwachung 140, ein Gehäuse 142 und eine Druckstange 144.

In der oberen Hälfte der Darstellung liegt der Bremsbelag 124 an der Bremsscheibe 122 an. Die Feder 128 ist in entspanntem Zustand. In der unteren Hälfte wird nicht gebremst und die Feder 128 befindet sich in vorgespanntem Zustand.

Zur Überwachung der Bremse 120 ist eine Einrichtung 146 zur Überwachung des zeitlichen Verlaufs des Öldrucks vorgesehen. Diese Einrichtung 146 kann ebenfalls das Signal eines Endlageschalters 148 einlesen und auswerten. In der oberen Hälfte ist der Schalter geöffnet 150, in der unteren Hälfte ist dieser geschlossen 152. In dieser Stellung wird nun überprüft, ob der zum Erreichen der Endlage erforderliche Kraftaufwand einem vorgegebenen Wert entspricht.

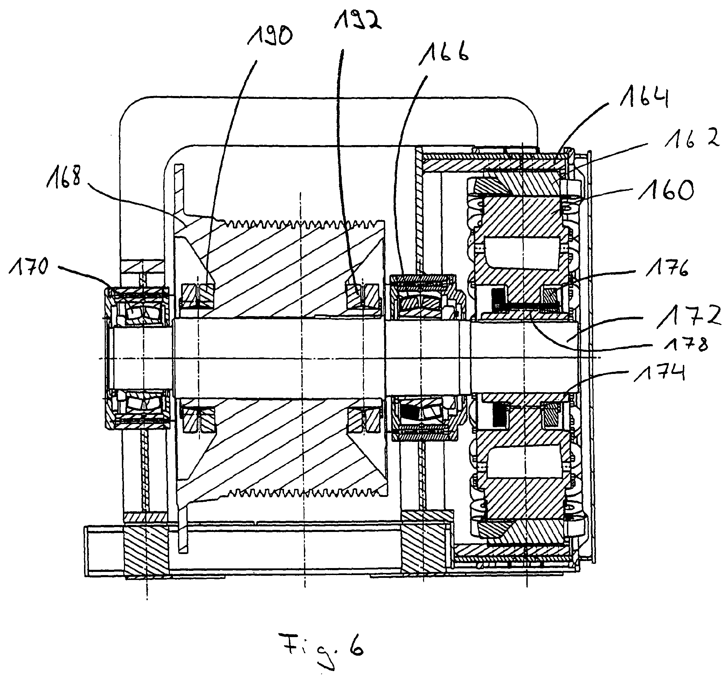

In Figur 6 ist in vereinfachter Darstellung eine erfindungsgemäße Rotorbefestigung wiedergegeben. Die Darstellung zeigt einen fliegend gelagerten Rotor 160, einen Stator 162, ein Motorgehäuse 164, ein antriebsseitiges Lager 166, eine Treibscheibe mit Bremsscheibe 168, ein B-Lager 170 und eine Welle 172, auf der der Rotor 160 gelagert ist. Bei der Montage ist der Rotor 160 in horizontaler Richtung auf die Welle 172 aufzuschieben und anschließend durch die Welle 172 gehalten exakt positionierbar.

Der Rotor 160 umgreift mit seiner Rotornabe 174 die Welle 172, wobei er mittels eines Spannelements 176 mit Spannschrauben 178 verspannbar ist und somit fest auf der Welle 172 befestigt werden kann. Nach Lösen des Spannelements 176 läßt sich der Rotor 160 entlang der Welle 172 bewegen und somit positionieren oder demontieren, wobei das Eigengewicht des Rotors 160 durch die Welle 172 gehalten ist.

Die Treibscheibe 168 kann ebenfalls mittels Spannelementen 190 und 192 auf der Welle befestigt sein. Dies ermöglicht, dass die Treibscheibe 168 wie der Rotor 160 einfach einund ausgebaut werden kann. In der vorliegenden Anmeldung ist. somit ein Elektromotor beschrieben, bei dem der Rotor 160 und die Treibscheibe 168 mittels Spannelementen, die als ein- bzw. zweiteilige bzw. geteilte Schrumpfscheibe ausgebildet sein können, zu befestigen sind.

Es wird zusätzlich ein Elektromotor offenbart, bei dem lediglich die Treibscheibe mittels eines Spannelements, bspw. mittels mindestens einer Schrumpfscheibe, zu befestigen ist.

## Patentansprüche

1. Aufzugantrieb mit wenigstens zwei Umrichtern und einem Elektromotor mit einem Rotor und einem Stator, der eine Statorwicklung mit Spulen aufweist, wobei der Stator in eine Anzahl an Segmenten unterteilt ist, wobei jedem Segment ein Umrichter der wenigstens zwei Umrichter zugeordnet ist und jedes Segment aus einem unabhängigen m-Phasensystem besteht, wobei jede Spule der Statorwicklung in konzentrierter Form ausgebildet ist, **dadurch gekennzeichnet, dass** wenigstens zwei Segmente parallel oder in Reihe verschaltet sind, wobei die wenigstens zwei parallel oder in Reihe verschalteten Segmente mit einem Umrichter der wenigstens zwei Umrichter betrieben werden.

2. Aufzugantrieb nach Anspruch 1, der als Direktantrieb ausgebildet ist.

3. Aufzugantrieb nach Anspruch 1 oder 2, bei dem der Stator in Umfangsrichtung in Segmente unterteilt ist.

4. Aufzugantrieb nach einem der Ansprüche 1 bis 3, bei dem der Elektromotor als permanenterregter Synchronmotor ausgebildet ist.

5. Aufzugantrieb nach einem der Ansprüche 1 bis 4, bei dem jede Wicklung im Stator als Einzahnwicklung ausgebildet ist.

6. Aufzugantrieb nach einem der Ansprüche 1 bis 5, bei dem die einzelnen Spulen der Statorwicklung parallel oder in Reihe zu einem Wicklungsstrang verschaltbar sind.

7. Aufzugantrieb nach einem der Ansprüche 1 bis 6, bei dem die einzelnen Segmente galvanisch und/oder magnetisch voneinander getrennt sind.

8. Aufzugantrieb nach einem der Ansprüche 1 bis 7, bei dem der von Permanentmagneten des Rotors erzeugte Fluss über Polschuhe geführt ist.

9. Aufzugantrieb nach einem der Ansprüche 1 bis 8, bei dem die Anordnung der Permanentmagnete im Rotor zusammen mit zwischen ihnen angeordneten Polschuhen eine Flusskonzentration für den Magnetfluss ausbilden.

10. Aufzugantrieb nach einem der Ansprüche 1 bis 9, bei dem das Magnetfeld der einzelnen Segmente sich nur im Bereich des Segments ausbreitet und in dem einzelnen Segment ein Drehmoment erzeugt.

11. Elektromotor für einen Aufzugantrieb nach einem der Ansprüche 1 bis 10, mit einem Motorgehäuse und einer Anzahl an Motorwicklungen, die an mindestens einer Klemme angeschlossen sind, wobei an dem Motorgehäuse Rippen oder Stege angeordnet sind, zwischen denen die mindestens eine Klemme angeordnet ist.

## Claims

1. Elevator drive having at least two converters and an electric motor with a rotor and a stator, the stator comprising a stator winding with coils, wherein the stator is divided into a number of segments, each segment being assigned one converter of the at least two converters, and wherein each segment consists of an independent m-phase system, wherein each coil of the stator winding is in concentrated form, **characterized in that** at least two segments are connected in parallel or in series, while the at least two segments connected in parallel or in series are driven with one converter of the at least two converters.

2. Elevator drive according two claim 1, provided as a direct drive.

3. Elevator drive according to claim 1 or claim 2, in which the stator is divided into segments in circumferential direction.

4. Elevator drive according to any one of claims 1 to 3, in which the electric motor is a synchronous motor with magnet excitation.

5. Elevator drive according to any one of claims 1 to 4, in which each winding is in the form of a single-tooth winding.

6. Elevator drive according to any one of claims 1 to 5, in which the individual coils of the stator winding are connectable in parallel or in series to a winding phase or strand.

7. Elevator drive according to any one of the claims 1 to 6, in which the individual segments are galvanically and/or magnetically isolated from one another.

8. Elevator drive according to any one of claims 1 to 7, in which the flux produced by permanent magnets of the rotor is guided via pole shoes.

9. Elevator drive according to any one of the claims 1 to 8, in which the arrangement of permanent magnets in the rotor together with pole shoes arranged between them form flux concentration for the magnetic flux.

10. Elevator drive according to any one of claims 1 to 9, in which the magnetic field of the individual segments spreads out only in the area of the segment, and produces a torque in the individual segment.

11. Electric motor for elevator drive according to any one of claims 1 to 10 comprising a motor housing and a number of motor windings connected to at least one terminal, with ribs or webs being provided on the motor housing, between which the at least one terminal is provided.

## Revendications

1. Entraînement d'ascenseur ayant au moins deux convertisseurs et un moteur électrique muni d'un rotor et d'un stator, le stator comportant un enroulement de stator avec des bobines, dans lequel le stator est divisé en plusieurs segments, chaque segment étant affecté à un convertisseur parmi les au moins deux convertisseurs, et dans lequel chaque segment est constitué d'un système à m phases indépendant, dans lequel chaque bobine de l'enroulement de stator se présente sous une forme concentrée, **caractérisé en ce qu'**au moins deux segments sont raccordés en parallèle ou en série, alors que les au moins deux segments raccordés en parallèle ou en série sont entraînés avec un convertisseur parmi les au moins deux convertisseurs.

2. Entraînement d'ascenseur selon la revendication 1, fourni sous la forme d'un entraînement direct.

3. Entraînement d'ascenseur selon la revendication 1 ou la revendication 2, dans lequel le stator est divisé en segments dans une direction circonférentielle.

4. Entraînement d'ascenseur selon l'une quelconque des revendications 1 à 3, dans lequel le moteur électrique est un moteur synchrone avec une excitation par aimants.

5. Entraînement d'ascenseur selon l'une quelconque des revendications 1 à 4, dans lequel chaque enroulement se présente sous la forme d'un enroulement à une seule dent.

6. Entraînement d'ascenseur selon l'une quelconque des revendications 1 à 5, dans lequel les bobines individuelles de l'enroulement de stator peuvent être raccordées en parallèle ou en série à une phase ou un brin d'enroulement.

7. Entraînement d'ascenseur selon l'une quelconque des revendications 1 à 6, dans lequel les segments individuels sont isolés galvaniquement et/ou magnétiquement les uns des autres.

8. Entraînement d'ascenseur selon l'une quelconque des revendications 1 à 7, dans lequel le flux produit par des aimants permanents du rotor est guidé par des épanouissements polaires.

9. Entraînement d'ascenseur selon l'une quelconque des revendications 1 à 8, dans lequel l'agencement d'aimants permanents dans le rotor associé aux épanouissements polaires agencés entre eux forment une concentration de flux pour le flux magnétique.

10. Entraînement d'ascenseur selon l'une quelconque des revendications 1 à 9, dans lequel le champ magnétique des segments individuels s'étend uniquement dans la zone du segment, et produit un couple dans le segment individuel.

11. Moteur électrique pour un entraînement d'ascenseur selon l'une quelconque des revendications 1 à 10, comportant un carter de moteur et plusieurs enroulements de moteur raccordés à au moins une borne, des nervures ou des bandes étant agencées sur le carter de moteur, entre lesquelles la au moins une borne est agencée.
